# EUROPEAN PATENT SPECIFICATION

(11) **EP 0 454 279 B1**
(45) Date of publication and mention of the grant of the patent: **15.06.1994**
(21) Application number: 91250080.8
(22) Date of filing: 18.03.1991
(51) Int. Cl.: B60J 7/08, B60R 21/13

(54) **Open car**
Offenes Kraftfahrzeug
Voiture découvrable

(30) Priority: 27.04.1990 JP 113532/90
(43) Date of publication of application: 30.10.1991
(73) Proprietor: SUZUKI MOTOR CORPORATION, Hamana-gun, Shizuoka-ken (JP)
(72) Inventor: Akimoto, Nobuo, Iwata-gun, Shizuoka Pref. (JP); Araki, Minoru, Hamana-gun, Shizuoka Pref. (JP)
(74) Representative: Meissner, Peter E., Dipl.-Ing.

(56) References cited:
- FR-A- 1 049 026
- US-A- 4 557 502
- US-A- 4 711 485

## Description

### FIELD OF THE INVENTION AND RELATED ART STATEMENT

The present invention relates to an open car, and more specifically to a targa roof type automobile.

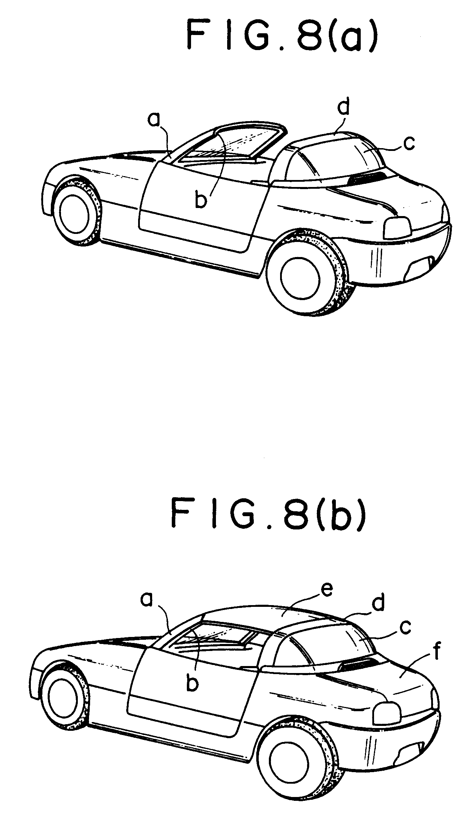

Fig. 8 shows a targa roof type automobile conceptually.

In such an automobile, a mode in which an upper part of a car body is opened leaving a front glass frame b including front window glass a and a roll bar d including back window glass c as shown in Fig. 8 (a) and a mode in which a hard roof e is stretched across between an upper edge portion of the front glass frame b and an upper edge portion of the roll bar d as shown in Fig. 8 (b) may be adopted.

Hereupon, when such an automobile is used in a state that the upper part of the car body is opened, sufficient feeling of opening is not obtainable because the roll bar d remains in the upper part of the car body.

An open car with the features in the first part of claim 1 is known from US-A- 4557 502.

However, the roll bar of the automobile is provided with the back window glass in one body, and a space having an adequate depth is required in the car body in order to house the roll bar in the car body.

When such a space is secured, however, layout of other parts is restricted and structural change of the car body is compelled.

An open car with a back window glass fitted to a roll bar telescopically and supported rotatably with respect to the roll bar is known from FR-A- 1049 026.

### OBJECT AND SUMMARY OF THE INVENTION

It is an object of the present invention to provide an open car in which only a small space is required for housing a roll bar and back window glass.

The open car of the present invention, is characterized by the features mentioned in the second part of claim 1.

An open car according to the present invention, may be used as a full open car because the roll bar and the back window glass may be housed in the car body, and moreover, only a small housing space is required because the back window glass may be housed in the roll bar.

### BRIEF DESCRIPTION OF THE DRAWINGS

Fig. 1 is an exploded perspective view showing a roll bar and back window glass which are adopted in an open car according to the present invention;
Fig. 2 is a perspective view showing the whole of an open car according to the present invention;
Fig. 3 is a partial sectional side view showing a set up state of a roll bar in the open car;
Fig. 4 is a lateral sectional view showing an operation unit of the roll bar;
Fig. 5 is a sectional view taken along a line V-V in Fig. 3;
Fig. 6 is a partial sectional side view showing a state on the way of housing operation of the roll bar and the back window glass;
Fig. 7 is a partial sectional side view showing a housed state of the roll bar and the back window glass; and
Fig. 8 is a perspective view showing a use mode of a conventional targa roof type automobile.

### DETAILED DESCRIPTION OF PREFERRED EMBODIMENTS

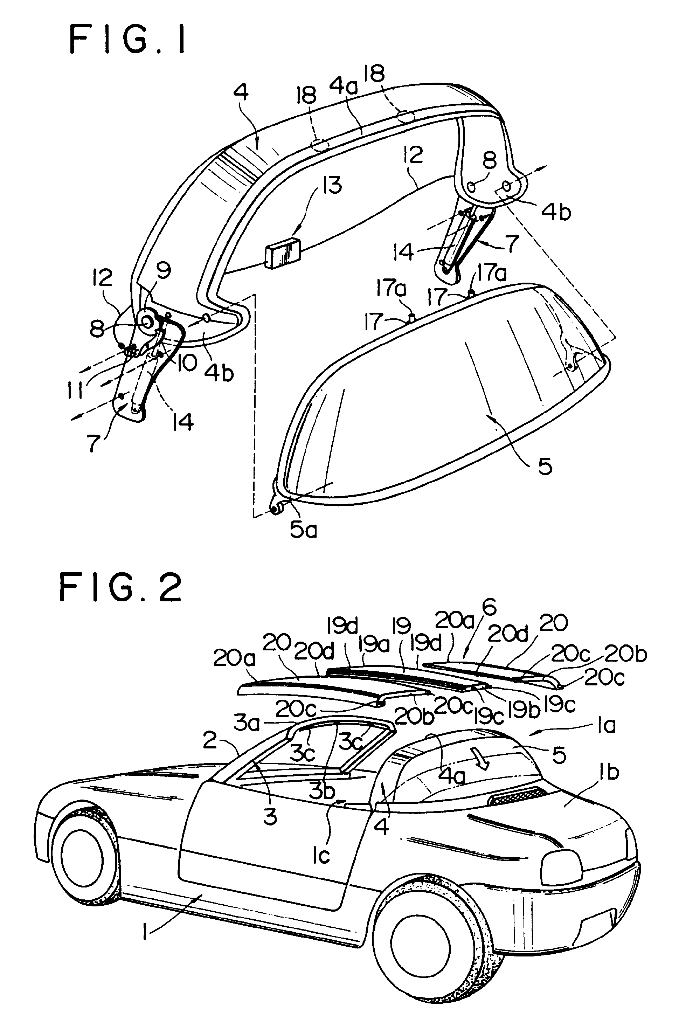

As shown in Fig. 2, an upper part 1a of a car body of an automobile 1 is provided with a front glass frame 3 equipped with front window glass 2, a roll bar 4, back window glass 5 which covers the interior 1c of the car body from the roll bar 4 to the rear part 1b of the car body, and a roof 6 installed stretching across the upper edge part 3a of the front glass frame 3 and the upper edge part 4a of the roll bar 4.

In the automobile 1, the roll bar 4 and the back window glass 5 are constructed independently, respectively as shown in Fig. 1. On the other hand, brackets 7 are fixed to inside surfaces on both sides of the car body, and pins 8 which are embedded at lower end parts 4b on both sides of the roll bar 4 are inserted into the brackets 7. Thus, the roll bar 4 is rotated toward the rear of the car body with pins 8 as centers as described later.

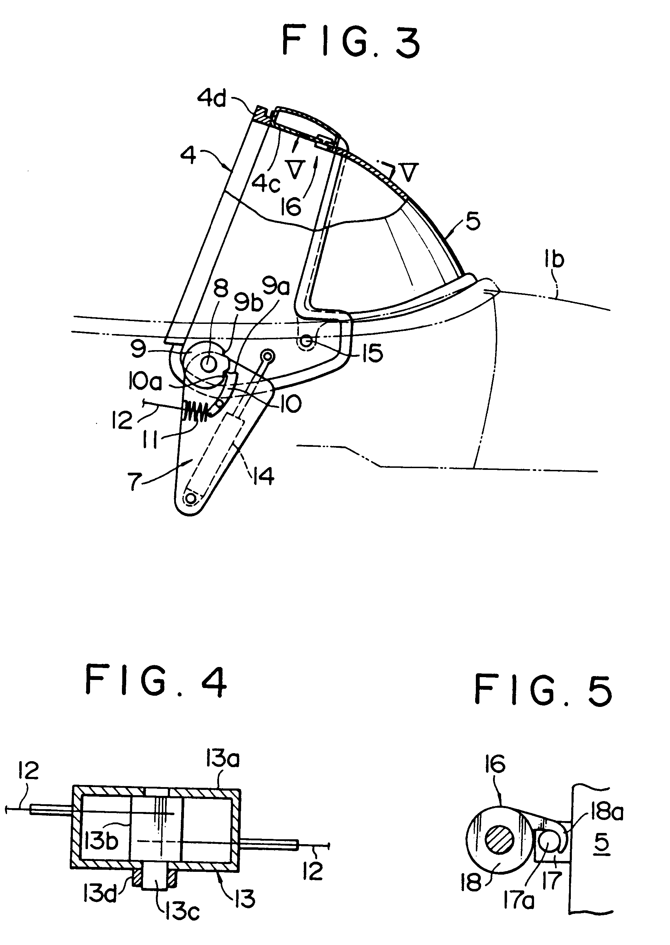

Further, as shown in Fig. 3, a plate 9 having notches 9a and 9b on the circumferential face thereof is attached fixedly at a point of the pin 8 of the roll bar 4, and a lever 10 having a pawl 10a at the point is disposed on the bracket 7. Then, the lever 10 is urged by a spring 11 so as to fit the pawl 10a to either one of the notches 9a and 9b of the plate 9, and positions the roll bar 4 as described later. One end of a wire 12 is connected to the lever 10, and the lever 10 is operated by means of an operation unit 13 installed at a rear part of the interior 1c of the car body.

As shown in Fig. 4, the operation unit 13 has a drum 13b in a case 13a, and an operating lever 13d is fixedly attached to a shaft 13c of the drum 13b extended to the outside of the case 13a. Further, another end of the wire 12 is attached to the drum 13b of the operation unit 13. Accordingly, when the operating lever 13d is rotated in one direction, the wire 12 is taken up by the drum 13b, and the lever 10 is operated against the urging force of the spring 11, thereby to have the pawl 10a disengaged from the notch 9a or 9b of the plate 9.

Further, a balancer 14 such as a gas stay is installed between the bracket 7 and the roll bar 4. Thus, the roll bar 4 is rotated gently. Incidentally, it may also be arranged so that a spring is included in this balancer 14 so as to urge the roll bar always in a pushing up direction.

Furthermore, the back window glass 5 is provided with a frame 5a on the circumferential edge thereof as shown in Fig. 1, and the frame 5a is supported at the lower end parts 4b on both sides of the roll bar 4 by means of pins 15. Furthermore, the back window glass 5 is fitted telescopically with the roll bar 4. Accordingly, the back window glass 5 is rotated independently of the roll bar 4 and housed in the roll bar 4. Engagement means 16 is provided on these roll bar 4 and back window glass 5. The engagement means 16 form the roll bar 4 and the back window glass 5 in one body in a state that they are projected above the upper part 1a of the car body as shown in Fig. 3. Tongue pieces 17 are fixed on the back window glass 5, pins 17a are provided being set up on the tongue pieces 17, engagement pieces 18 are embedded rotatably on a ceiling 4c of the roll bar 4, and the roll bar 4 and the back window glass 5 are formed in one body by rotating the engagement pieces 18 so that the pawls 18a engage with the pins 17a as shown in Fig. 5.

Further, the roof 6 of the present embodiment is divided into three portions, a center roof portion 19 and side roof portions 20 and 20, as shown in Fig. 2. The center roof portion 19 has projection pieces not shown on a front end face 19a, and pins 19c on a rear end face 19b. The pins 19c are installed so as to appear and disappear freely on the rear end face 19b of the center roof portion 19, and are urged by a spring not shown so as to be maintained in a projected state. Further, on the underside of the rear end portion of the center roof portion 19 is disposed a handle not shown, and the handle is interlinked with the pins 19c. Thus, the pins 19c are made to sink into the rear end face 19b of the center roof portion 19 by operating the handle. On the other hand, each of the side roof portion 20 also has projection pieces not shown on a front end face 20a and pins 20c on a rear end face 20b. The pins 20c are installed so as to appear and disappear freely on the rear end face 20b of the side roof portion 20, and are urged by a spring not shown so as to be maintained in a projected state. Further, on an underside of the rear end portion of the side roof portion 20 is disposed on a handle not shown, and the pins 20c are made to sink into the rear end face 20b of the side roof portion 20 by operating the handle. Furthermore, steps 19d are formed on the both side edges of the center roof portion 19, and steps 20d corresponding to the steps 19d are also formed on side edges on the sides of the center roof portion 19 of the side roof portions 20.

On the other hand, bores 3b and 3c into which the projected pieces of the center roof portion 19 and the side roof portion 20 are inserted are formed, respectively, on the upper edge part 3a of the front glass frame 3, and bores into which the pins 19c and 20c of the center roof portion 19 and the side roof portions 20 are inserted are formed, respectively, on the upper edge part 4a of the roll bar 4.

Further, in this roof 6, respective projection pieces of the center roof portion 19 and the side roof portions 20 are fitted into bores 3b and 3c of the front glass frame 3, and then, the pins 19c and 20c of the center roof portion 19 and the side roof portions 20 are made to be opposite to respective bores on the upper edge part 4a of the roll bar 4 in a state that the handle is operated, viz., in a state that the pins 19c and 20c are made to sink into the center roof portion 19 and the side roof portions 20, respective pins 19c and 20c are projected by releasing the operation of the handle, and the pins 19c and 20c are made to fit into the bores, thus supporting the center roof portion 19 and the side roof portions 20 with the roll bar 4.

Incidentally, it is only required to take reverse steps of above-mentioned procedures for removing the roof 6, and removed center roof portion 19 and side roof portions 20 are housed in a trunk room and like.

The operation of opening the upper part 1a of the car body in the automobile 1 will be described hereunder.

The roll bar 4 in a state that the roof 6 is mounted is in a set up state as shown in Fig. 3. The pawl 10a of the lever 10 is engaged with the notch 9a of the plate 9 of the roll bar 4 and the roll bar 4 is locked at the set up position. Further, the back window glass 5 is formed in one body with the roll bar 4 by the engagement means 16.

First, the pawl 10a of the lever 10 is made to be disengaged from the notch 9a of the plate 9 by operating the lever 13d of the operation unit 13. Then, the roll bar 4 is released from the locked state.

Next, when the roll bar 4 is pushed to the rear of the car body, the roll bar 4 is rotated with the pins 8 as centers until the back window glass 5 abuts against a floor 1e of a housing portion 1d of the car body.

Then, engagement pieces 18 of the engagement means 16 are rotated so as to have pawls 18a thereof disengaged from the pins 17a, and the engaged state of the roll bar 4 and the back window glass 5 is released. Thus, the roll bar will be able to rotate further.

Now, when the roll bar 4 is pushed toward the back window glass 5, the roll bar 4 is rotated until the notch 9b of the plate 9 engages with the pawl 10a of the lever 10, and the notch 9b engages with the pawl 10a and locked there. The roll bar 4 in such a state is housed practically in the housing portion 1d of the car body. In the interim, the back window glass 5 is rotated inwardly into the roll bar 4 relatively with respect to the roll bar 4 with a pin 15 as the center and is housed in the roll bar 4. At that time, the back window glass 5 is rotated with a fulcrum (pin 15) which is different from a fulcrum (pin 8) of the roll bar 4 as the center. Therefore, the back window glass 5 has a locus which becomes more distant from the ceiling 4c of the roll bar 4. Accordingly, in the roll bar 4 and the back window glass 5 having such a construction, it is possible to adopt the back window glass 5 which has a small curvature, that is, which stretches to the rear of the car body.

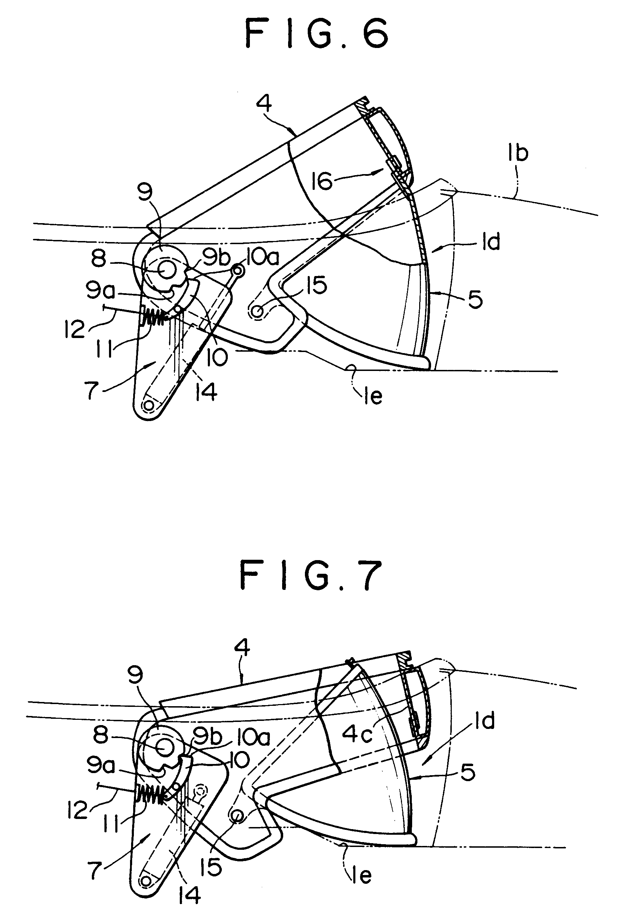

In order to set up the roll bar 4 from this state, the pawl 10a of the lever 10 is disengaged from the notch 9b of the plate 9 by operating the lever 13d of the operation unit 13, thereby to release the locked state of the roll bar 4, and to pull up the roll bar 4 thereafter. Then, when the roll bar 4 reaches a position shown in Fig. 3, the notch 9a of the plate 9 engages with the pawl 10a of the lever 10, and the roll bar 4 is locked there. In the interim, the back window glass 5 engages with the roll bar 4 at the position shown in Fig. 6, and is moved to a position shown in Fig. 3 thereafter together with the roll bar 4. When the roll bar 4 reaches the position shown in Fig. 3 in such a manner, the engagement pieces 18 of the engagement means 16 are rotated and the pawls 18a thereof are made to engage with the pins 17a, thus forming the roll bar 4 and the back window glass 5 in one body.

Further, the roof 6 may be mounted on the front glass frame 3 and the roll bar 4 in such a manner as described above in case of necessity.

## Claims

1. An open car provided with a roll bar (4) and a back window glass (5), comprising locking means (7, 8, 9) for disposing said roll bar (4) rotatably to the rear with respect to a car body and for locking said roll bar (4) at a set up position; and engagement means (16) which have said back window glass fitted to said roll bar (4) at a position where said roll bar is set up; wherein, said roll bar (4) and said back window glass (5) are housed in the car body in a state that said back window glass is housed in said roll bar,
characterized in that
the back window glass (5) is fitted to said roll bar (4) telescopically and is supported rotatably with respect to said roll bar and that said locking means is provided with a plage (9) which is installed in one body with a rotating shaft (8) of said roll bar and has notches (9a, 9b) formed on a circumferential face thereof, a lever (10) which has a pawl (10a) at a point and in which said pawl is supported by the car body so as to be able to engage with and disengage from the notches of said plate (9), a spring (12) which urges said lever (10) in a direction that said pawl (10a) abuts against the notches (9a, 9b) of said plate (9), and an operation unit (13) which is interlocked with said lever (10) through a wire (12) and rotates said lever (10) against the urging force of said spring.

2. An open car according to claim 1,
wherein a fulcrum of rotation of said roll bar (4) and a fulcrum of rotation of said back window glass (5) are positioned at separate positions from each other.

3. An open car according to claim 2,
wherein said operation unit (13) is provided with a drum (13b) which takes up said wire (12) and an operation lever (13d) for rotating said drum (13b).

4. An open car according to claim 1,
wherein said engagement means (16) is provided with pins (17a) disposed at an end portion of said back window glass (5) and locking pieces (18) which are disposed rotatably on said roll bar (4) and have pawls (18a) which engage wiht said pins (17a) at the points thereof.

## Patentansprüche

1. Ein offener Wagen, versehen mit einem Überrollbügel (4) und einem Heckfenster (5), die Mittel zum Feststellen (7, 8, 9) umfassen, um den Überrollbügel (4) drehbar zum hinteren Teil einer Karosserie eines Kraftfahrzeuges anzubringen, und um den Überrollbügel 4 in einer aufgerichteten Stellung festzustellen; und ineinandergreifende Teile (16), die das Heckfenster an den in einer aufgerichteten Stellung befindlichen Überrollbügel (4) anpassen; wobei der Überrollbügel (4) und das Heckfenster (5) in einem Zustand, in dem das Heckfenster im Überrollbügel verstaut ist, in der Karosserie des Kraftfahrzeugs verstaut werden,
gekennzeichnet dadurch, daß
das Heckfenster (5) am Überrollbügel (4) ausziehbar angebracht ist, und hinsichtlich des Überrollbügels drehbar gestützt wird, und daß das Mittel zum Feststellen mit einer Platte (9) ausgerüstet ist, die mit der drehenden Welle (8) des Überrollbügels einen Körper bildet und Rasten (9a, 9b) besitzt, die auf der am Umfang verlaufenden Seitenfläche der Welle geformt sind, einen Hebel (10), der an einem Punkt eine Sperrklinke (10a) hat, an dem die Sperrklinke durch die Karosserie des Kraftfahrzeugs gehalten wird, um mit den Rasten der Platte (9) ineinandergreifen und sich von ihnen lösen zu können, eine Feder (12), die den Hebel (10) in eine Richtung drückt, so daß die Sperrklinke (10a) gegen die Rasten (9a, 9b) der Platte stößt, und eine Bedienungseinheit (13), die mit dem Hebel (10) durch einen Draht (12) verbunden ist, und den Hebel (10) gegen die Druckkraft der Feder dreht.

2. Offener Wagen gemäß Anspruch 1,
bei dem ein Drehpunkt für die Drehung des Überrollbügels (4) und ein Drehpunkt für die Drehung des Heckfensters (5) an voneinander unterschiedlichen Stellungen angebracht sind.

3. Offener Wagen gemäß Anspruch 1,
bei dem die Bedienungseinheit (13) mit einer Trom-. mel (13b) ausgerüstet ist, die den Draht (12) aufnimmt, und einem Bedienungshebel (13d), um die Trommel zu drehen (13d).

4. Offener Wagen gemäß Anspruch 2,
bei dem das ineinandergreifende Mittel (16) mit Stiften (17a), die am Endabschnitt des Heckfensters (5) angebracht sind, und mit ineinandergreifenden Teilen (18a) versehen ist, die drehbar am Überrollbügel befestigt sind und Sperrklinken (18A) besitzen, die mit den Stiften (17a) an deren Punkten ineinandergreifen.

## Revendications

1. Voiture découverte munie d'un arceau mobile (4) et d'une vitre arrière (5), comprenant des moyens de verrouillage (7,8,9) pour disposer ledit arceau (4) de façon rotative vers l'arrière par rapport à la carrosserie et pour verrouiller ledit arceau (4) en position dressée, et des moyens d'engagement (16) qui relient ladite vitre arrière audit arceau (4) en une position dans laquelle ledit arceau est dressé, dans laquelle ledit arceau (4) et ladite vitre arrière (5) sont logés dans la carrosserie de sorte que ladite vitre arrière est logée dans ledit arceau,
caractérisée en ce que la vitre arrière (5) est reliée audit arceau (4) de façon télescopique et est supportée de façon rotative par rapport audit arceau, et en ce que lesdits moyens de verrouillage sont munis d'une plaque (9) qui est installée dans un corps ayant un axe rotatif (8) dudit arceau et présente des encoches (9a,9b) formées sur une face circonférentielle de celle-ci, un levier (10) qui présente un cliquet (10a) à son extrémité, ledit cliquet étant supporté par la carrosserie, de façon à pouvoir être engagé avec les encoches de ladite plaque (9) ou désengagé de celles-ci, un ressort (12) qui sollicite ledit levier (10) dans une direction telle que ledit cliquet (10a) vient en aboutement contre les encoches (9a,9b) de ladite plaque (9), et une unité fonctionnelle (13) qui est reliée audit levier (10) par un fil métallique (12) et fait tourner ledit levier (10) contre la force de sollicitation dudit ressort.

2. Voiture découverte selon la revendication 1,
dans laquelle le centre de rotation dudit arceau (4) et le centre de rotation de ladite vitre arrière (5) sont prévus en des positions séparés l'un de l'autre.

3. Voiture découverte selon la revendication 2,
dans laquelle ladite unité fonctionnelle (13) est munie d'un tambour (13b) pour tendre ledit fil (12) et d'un levier d'actionnement (13d) pour faire tourner ledit tambour (13b).

4. Voiture découverte selon la revendication 1,
dans laquelle lesdits moyens d'engagement (16) sont munis de goupilles (17a) disposées à une partie d'extrémité de ladite vitre arrière (5) et de pièces de verrouillage (18) qui sont disposées de façon rotative sur ledit arceau (4) et présentent des cliquets (18a) qui s'engagent avec lesdites goupilles (17a) à leurs extrémités.
